# EUROPEAN PATENT SPECIFICATION

(11) **EP 3 154 305 B1**
(45) Date of publication and mention of the grant of the patent: **03.03.2021**
(21) Application number: 14894711.2
(22) Date of filing: 29.09.2014
(51) Int. Cl.: H04W 76/10

(54) **DATA TRANSMISSION METHOD AND DATA TRANSMISSION SYSTEM**
DATENÜBERTRAGUNGSVERFAHREN UND DATENÜBERTRAGUNGSSYSTEM
PROCÉDÉ DE TRANSMISSION DE DONNÉES ET SYSTÈME DE TRANSMISSION DE DONNÉES

(30) Priority: 09.06.2014 CN 201410253512
(43) Date of publication of application: 12.04.2017
(73) Proprietor: Nanchang Coolpad Intelligent Technology Company Limited, Nanchang, Jiangxi Province (CN)
(72) Inventor: ZHANG, Chenlu, Shenzhen Guangdong 518057 (CN); YANG, Kewen, Shenzhen Guangdong 518057 (CN)
(74) Representative: Krauns, Christian
(86) International application number: PCT/CN2014/087829
(87) International publication number: WO 2015/188526

(56) References cited:
- CN-A- 102 571 856
- CN-A- 103 533 500
- CN-A- 103 731 900
- CN-A- 104 009 998
- CN-A- 104 010 300
- CN-A- 104 010 385
- US-A1- 2011 276 911

## Description

### Technical Field

The present disclosure relates to the field of sharing technologies, and particularly relates to a data transmission method and a data transmission system.

### Background

A terminal direct connection technology is a key core technology of a subsequent LTE (Long Term Evolution) and a future 5G era. The technology provides technical supports for enhancing spectrum use efficiency, increasing a system throughput, reducing energy consumption of user equipments and reducing operation cost of operators.

Currently, a 3GPP (The Third Generation Partnership) already conducts research on a direct connection communication (Device-to-Device) technology. In a related subject study at beginning of 2013, a 3GPP SA working group defined various application scenarios of the direct connection communication and initiated a standardization job at an RAN (Residential Access Network) side in 2013.

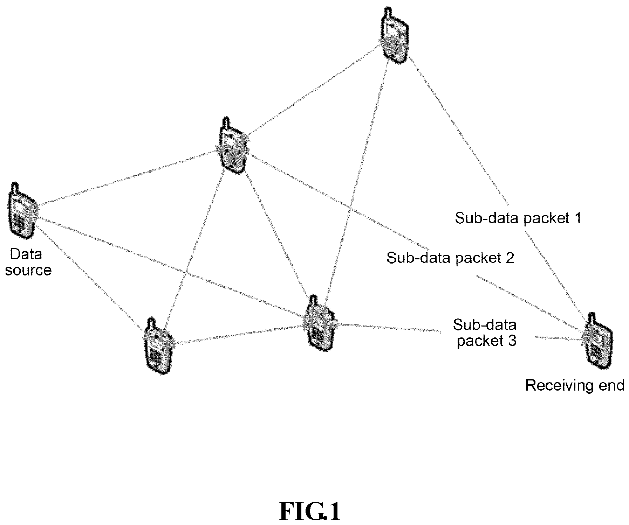

However, the current research on the direct connection communication technology at the RAN side mainly focuses on a method for establishing direct connection communication on a physical layer, and has a major scenario on how to establish a direct connection communication network between two UEs. The academia also proposes a future application scenario of the direct connection communication, i.e., combining the direct connection communication with P2P (Peer to Peer), so as to realize data sharing in LAN for the direct connection communication. This important scenario can enhance data sharing and forwarding efficiency and reduce a load at a network side (as shown in Figure 1).

However, a current 3GPP standardization process mainly focuses on how to establish the direct connection communication between the two UEs (terminals), and has a potential working hypothesis that "both of the two UEs which meet physical establishing conditions (e.g., a distance close enough) of the direct connection communication can realize the direct connection communication", without considering authentication and excitation problems of the UEs, i.e., without considering whether it is safe when transferring UE conducts data transfer and transmission or without considering giving an excitation to the UEs conducting data transfer.

Therefore, how to establish an optimized direct connection communication network model so as to solve a trust problem and an excitation problem in a direct connection communication network becomes a problem needed to be solved.

The CN 103 533 500 A discloses a communication method of neighboring terminals. The communication method comprises the step that after receiving a communication service request which is initiated by a terminal, a network side allocates device-to-device communication service resources to the terminal and an opposite-end terminal when the network side confirms that the communication between the terminal and the opposite-end terminal with which the terminal is to establish communication satisfies the conditions of the device-to-device communication, such that the device-to-device communication is established between the terminal and the opposite-end terminal. The communication method comprises the step that after the terminal and the opposite-end terminal with which the terminal is to establish communication receives the device-to-device communication service resources allocated by the network side, the device-to-device communication is established between the terminal and the opposite-end terminal.

The CN 102 571 856 A discloses a method, a device and asystem for selecting a transition node. The method comprises the steps of: obtaining a transition service type; and selecting the transition node according to the transition service type, and network capacity information, physical capacity information and system capacity information of the candidate transition nodes. It discloses that a more proper transition node is selected for a source node and a destination node on the basis of different priority screening modes of the network capacity information, the physical capacity information and the system capacity information according to different service application contexts.

### Summary

The problem of the present invention is solved by a data transmission method according to the independent claim 1 and by a data transmission system according to the independent claim 8. The dependent claims refer to further advantageous developments of the present invention. The present disclosure proposes a new technical solution just based on above problems, and can establish an optimized direct connection communication network model so as to solve a trust problem and an excitation problem in a direct connection communication network.

In view of this, one aspect of the present disclosure proposes a data transmission method, including: judging whether to adopt a data transmission mode of a direct connection communication according to a service request received by a network side or triggered by the network side, determining a data source node and a data reception target node corresponding to the service request when a judgment result is to adopt the data transmission mode of the direct connection communication; selecting a bearer network node corresponding to the data source node and the data reception target node according to a physical domain network selection principle and a business mode domain network selection principle; and determining a network structure corresponding to the data transmission mode of the direct connection communication according to the bearer network node, the data source node and the data reception target node.

In the technical solution, after receiving the service request or triggering the service request, the network side judges whether to conduct data transmission in a manner of establishing a direct connection communication network. The service request includes a data sharing request and an ordinary service request. As for the ordinary service request, the network side judges whether a node having a same service requirement exists or whether a shared network having a same service exists, and then judges whether to create or join an existing direct connection communication network in combination with a network (core network and/or access network) load condition. As for a data transmission request, the network side judges whether to use a direct connection communication mode to realize data transmission according to the network load condition. On a basis of determining a source UE (data source node) and a reception UE (data reception target node), a UE which conforms to a certain error rate and a time delay requirement can be selected according to the physical domain network selection principle; then a UE with a high safety and credit level can be further selected by adding the business mode domain network selection principle, and a data transmission network structure of the direct connection communication with high safety factor and good data transmission performance is determined, so as to finally ensure high efficiency and safety of information transmission and effectively solve the trust problem and the excitation problem in the direct connection communication network.

In the above technical solution, the physical domain network selection principle may include a distance principle and/or a signal quality principle, and the business mode domain principle may include a credit principle and/or an excitation principle.

In the technical solution, the physical domain network selection principle is a principle of selecting a transfer UE for a lower-layer physical domain network in the direct connection communication network, and the business mode domain principle is a principle of selecting a data transfer UE for a bearer network in the direct connection communication network. A transfer UE having appropriate distances with the source UE and the target UE can be selected by using the distance principle, so as to ensure effectiveness and rate of data transmission; a UE having good signal intensity can be selected by using the signal quality principle, so as to ensure correction rate of data transmission, so the transfer UE selected by using the physical domain network selection principle can establish a bottom-layer direct connection communication network which meets requirements of a certain error rate and a time delay; further, the bearer network effectively solves the trust problem and the excitation problem in the existing direct connection communication network by using the business mode domain principle (the credit principle and excitation principle).

A network construction principle based on credit makes restrictive modification to a physical domain network topology according to a credit relationship maintained by the network side or UE side, so that the actual bearer network meets the credit principle.

The credit principle is classified as follows.

A credit relationship maintained by the network side is as follows.

The credit relationship maintained by a network is maintained by the network side such as a base station or "a direct connection communication policy and management server", and has a main object to introduce access control based on operators. According to following principles, the network side can determine whether a certain node is allowed to be in a P2P data transmission network based on direct connection communication and whether the node can assume a data transmission or transfer role. Possible principles are as follows.
1. Access control based on network subscription data is as follows. During network access subscription, the user terminal determines whether the node can exist as a data transmission relay role in the direct connection communication network. Such information can be identified by 1 bit, and obtained from a user subscription database (e.g., HSS/HLR) in an authentication process. The node identified as Yes exists as a "credible node" in the absence of prior information of other judgment rules.
2. Access control based on histories is as follows. The network side continuously tracks and records user behaviors, such as number of times, duration and flow of a data transmission relay service completed by the user. Credit level of the user is comprehensively scored according to the above information. When certain conditions are met (e.g., a score threshold is met), the node is defined by the network side as a "credible node". Or, a trust priority is defined in accordance with a value of a comprehensive score. Relay selection is conducted according to the priority.

A credit relationship maintained by the UE side is as follows.

The credit relationship maintained by the UE side is maintained by the UE side, e.g., maintained by a UE upper-layer application or is reported by the UE to a dedicated server on a network side for performing background maintenance. A major purpose is to introduce a credit mechanism based on peculiar information of some users. For example:
1. UE relationship map maintained by the UE upper-layer application is as follows. The UE upper-layer application provides the relationship map, and then the relationship map is reported to the network side through signaling of a signaling side of an access network, and the network side conducts access limitation consideration when constructing a bearer network. The relationship map can define a credit priority for each "contact" according to the credit relationship. During consideration for relay, the relay is selected according to a priority order.
2. Relationship map provided by an application server on the network side is as follows. The UE upper-layer application establishes the relationship map, and map synchronization is realized by the application layer and the application server on the network side. When constructing the bearer network, the network side requests the relationship map to the application server and conducts access control according to the obtained information. The relationship map can define the credit priority for each "contact" according to the credit relationship. During consideration for relay, the relay is selected according to the priority order.

A network construction principle based on an excitation relationship is a reward and penalty mechanism established to support a certain business mode of the direct connection communication. Potential reward and penalty mechanisms can be as follows.
1. Excitation principle is as follows. The UE or network defines a certain excitation principle for data transmission services of the direct connection communication issued by the UE or network. According to the excitation principle, potential data transmission relay nodes can choose to assume or not to assume a data relay service. For example, a direct connection communication shared service defines the relay node, certain form of reward can be obtained when relaying every IMbis of data or 1 minute of data or 1 time of data transmission, e.g., free relay service of IMbis or 1 minute or 1 time from other users. N virtual accumulated points can be obtained when the relay node relays every IMbis of data or 1 minute of data or 1 time of data transmission.
2. Gain limitation principle is as follows. A potential data transmission relay node can define a gain limitation threshold for itself. When an excitation issued by a data transmission service of the direct connection communication meets the threshold, the node promises to provide the relay service therefor.
3. Principle based on agreement is as follows. The UE can promise to give other members a corresponding number of data relay services in a manner of adding a mutual-help group while promising to obtain data relay services given by members within the group, e.g., promising to give other members relay services of IMbis or N Mbit if obtaining relay services of IMbis from the members; promising to give other members relay services of 1 minute or N minutes if obtaining relay services of 1 minute from other members; and promising to give other members relay service of 1 time or N times if obtaining relay service of 1 time from other members.

In the above technical solution, the selecting a bearer network node corresponding to the data source node and the data reception target node according to the physical domain network selection principle and the business mode domain network selection principle may specifically include: selecting a plurality of physical domain target nodes having distances with the data source node and the data reception target node within a preset range and/or having signal quality or intensity within a preset signal quality or intensity range according to the distance principle and/or the signal quality principle; selecting at least one business mode domain target node with a credit level higher than or equal to a preset credit level and/or with an excitation higher than or equal to a preset excitation from the plurality of physical domain target nodes according to the credit principle and/or the excitation principle; and regarding the at least one business mode domain target node as the bearer network node.

In the technical solution, to effectively solve the credit problem and the excitation problem of the direct connection communication network so as to form a good business mode for the direct connection communication network and establish a bearer network having a high safety and credit level, a plurality of physical domain target nodes can be firstly selected according to the distance principle and/or signal quality principle, then at least one business mode domain target node is selected from the plurality of physical domain target nodes according to the credit principle and/or excitation principle; and the business mode domain target node acts as a bearer network node. Of course, this is only one of methods for establishing an optimized direct connection communication network so as to solve the credit problem and the excitation problem in the direct connection communication network. When selecting a plurality of physical domain target nodes, nodes having appropriate distances with the data source node and the data reception target node and having high signal quality and good intensity may be selected; and when selecting the bearer network node, the target node having high credit level and high excitation may be selected.

In the above technical solution, the selecting a bearer network node corresponding to the data source node and the data reception target node according to the physical domain network selection principle and the business mode domain network selection principle may specifically include: selecting a plurality of business mode domain target nodes with a credit level higher than or equal to a preset credit level and/or with an excitation higher than or equal to a preset excitation according to the credit principle and/or the excitation principle; selecting at least one physical domain target node having distances with the data source node and the data reception target node within a preset range and/or having signal quality within a preset signal quality range from the plurality of business mode domain target nodes according to the distance principle and/or the signal quality principle; and regarding the at least one physical domain target node as the bearer network node.

In the technical solution, the optimized direct connection communication network can be established and the credit problem and the excitation problem in the direct connection communication network can be solved by firstly selecting a plurality of business mode domain target nodes according to the credit principle and/or the excitation principle and then selecting the bearer network node from the plurality of business mode domain target nodes according to the distance principle and/or the signal quality principle. This solution is another solution for solving the credit problem and the excitation problem in the direct connection communication network. Of course, when selecting a plurality of physical domain target nodes, nodes having appropriate distances with the data source node and the data reception target node and having high signal quality and good intensity may still be selected; and when selecting the bearer network node, the target node having high credit level and high excitation may still be selected.

Of course, those skilled in the art should understand that the selecting a bearer network node corresponding to the data source node and the data reception target node according to the physical domain network selection principle and the business mode domain network selection principle includes but is not limited to above two manners, and an appropriate bearer network node can also be selected simultaneously according to the physical domain network selection principle and the business mode domain network selection principle.

In the above technical solution, the determining the data source node and the data reception target node corresponding to the data transmission request may specifically include: determining the data source node corresponding to the service request and searching a target node interested in a service corresponding to the service request and/or a target node in a plurality of service domains in a same interest group with the data source node; and regarding the service domain target node as the data reception target node.

In the technical solution, when determining the source node and the target node, not only the target node interested in the service can be searched according to the service request of the source node so as to conduct data transmission and sharing, but also the target node interested in the service can be searched in other nodes in a same interest group with the data source node. The interest group can be formed according to the upper-layer application or subscription data, such as groups in WeChat, QQ, etc.

In the above technical solution, the data source node which transmits the service request may include a terminal and a base station.

In the technical solution, the node which transmits the service request can be a terminal or a base station. When the terminal transmits the service request to the base station, the base station judges whether to execute data transmission according to the data request of the terminal and seeks other terminals interested in the data transmission for the terminal. When the base station transmits the data transmission request to the terminal, the terminal judges whether to be interested in the service request according to the data transmission request, and the base station selects a terminal to conduct data transmission according to feedback of the terminals.

In the above technical solution, the judging whether to adopt the data transmission mode of the direct connection communication may specifically include: acquiring a load of a current access network and/or a core network; adopting the data transmission mode of the direct connection communication when the load is greater than or equal to a preset load, and not adopting the data transmission mode of the direct connection communication when the load is less than the preset load.

In the technical solution, after receiving the request, the network side decides according to the load of the current access network and/or the core network whether to establish a shared network based on the direct connection communication, e.g., establishing the shared network based on the direct connection communication if the load of the core network and the access network is greater than a certain threshold, and adopting a unicast mode based on the base station for data transmission if the load of the core network and the access network is less than the threshold.

Another aspect of the present disclosure proposes a data transmission system, including: a judgment unit for judging whether a service request is a data transmission request in case of receiving the service request; a node determining unit for determining a data source node and a data reception target node corresponding to the data transmission request when a judgment result is that the service request is the data transmission request; a node selection unit for selecting a bearer network node corresponding to the data source node and the data reception target node according to a physical domain network selection principle and a business mode domain network selection principle; and a structure determining unit for determining a network structure corresponding to the data transmission mode of the direct connection communication according to the bearer network node, the data source node and the data reception target node.

In the technical solution, after receiving the service request or triggering the service request, the network side judges whether to conduct data transmission in a manner of establishing a direct connection communication network. The service request includes a data sharing request and an ordinary service request. As for the ordinary service request, the network side judges whether a node having a same service requirement exists or whether a shared network having a same service exists, and then judges whether to create or join an existing direct connection communication network in combination with a network (core network and access network) load condition. As for a data transmission request, the network side judges whether to use a direct connection communication mode to realize data transmission according to the network load condition. On a basis of determining a source UE (data source node) and a reception UE (data reception target node), a good data transmission network structure of the direct connection communication can be selected according to the physical domain network selection principle, so as to finally ensure high efficiency and safety of information transmission and effectively solve the trust problem and the excitation problem in the direct connection communication network.

In the above technical solution, the physical domain network selection principle may include a distance principle and/or a signal quality principle, and the business mode domain principle may include a credit principle and/or an excitation principle.

In the technical solution, the physical domain network selection principle is a principle of selecting a transfer UE for a lower-layer physical domain network in the direct connection communication network, and the business mode domain principle is a principle of selecting a data transfer UE for a bearer network in the direct connection communication network, where the transfer UE having appropriate distances with the source UE and the target UE can be selected by using the distance principle, so as to ensure data transmission effectiveness and rate; and the UE having good signal intensity can be selected by using the signal quality principle, so as to ensure data transmission correction rate, therefore the transfer UE selected by using the physical domain network selection principle can establish a bottom-layer direct connection communication network which meets a certain error rate and a time delay requirement; further, the bearer network effectively solves the trust problem and the excitation problem in the existing direct connection communication network by using the business mode domain principle (the credit principle and excitation principle),
where a network construction principle based on credit refers to conducting restrictive modification to a physical domain network topology according to a credit relationship maintained by the network side or UE side, so that an actual bearer network meets the credit principle.

The credit principle is classified as follows.

A credit relationship maintained by the network side is as follows.

The credit relationship maintained by a network is maintained by the network side such as a base station or "a direct connection communication policy and management server", and has a main object to introduce access control based on operators. According to following principles, the network side can determine whether a certain node is allowed to be in a P2P data transmission network based on direct connection communication and whether the node can assume a data transmission or transfer role. Possible principles are as follows.
1. Access control based on network subscription data is as follows. During network access subscription, the user terminal determines whether the node can exist as a data transmission relay role in the direct connection communication network. Such information can be identified by 1 bit, and obtained from a user subscription database (e.g., HSS/HLR) in an authentication process. The node identified as Yes exists as a "credible node" in the absence of prior information of other judgment rules.
2. Access control based on histories is as follows. The network side continuously tracks and records user behaviors, such as number of times, duration and flow of a data transmission relay service completed by the user. Credit level of the user is comprehensively scored according to the above information. When certain conditions are met (e.g., a score threshold is met), the node is defined by the network side as a "credible node". Or, a trust priority is defined in accordance with a value of a comprehensive score. Relay selection is conducted according to the priority.

A credit relationship maintained by the UE side is as follows.

The credit relationship maintained by the UE side is maintained by the UE side, e.g., maintained by a UE upper-layer application or is reported by the UE to a dedicated server on a network side for performing background maintenance. A major purpose is to introduce a credit mechanism based on peculiar information of some users. For example:
1. UE relationship map maintained by the UE upper-layer application is as follows. The UE upper-layer application provides the relationship map, and then the relationship map is reported to the network side through signaling of a signaling side of an access network, and the network side conducts access limitation consideration when constructing a bearer network. The relationship map can define a credit priority for each "contact" according to the credit relationship. During consideration for relay, the relay is selected according to a priority order.
2. Relationship map provided by an application server on the network side is as follows. The UE upper-layer application establishes the relationship map, and map synchronization is realized by the application layer and the application server on the network side. When constructing the bearer network, the network side requests the relationship map to the application server and conducts access control according to the obtained information. The relationship map can define the credit priority for each "contact" according to the credit relationship. During consideration for relay, the relay is selected according to the priority order.

A network construction principle based on an excitation relationship is a reward and penalty mechanism established to support a certain business mode of the direct connection communication. Potential reward and penalty mechanisms can be as follows.
1. Excitation principle is as follows. The UE or network defines a certain excitation principle for data transmission services of the direct connection communication issued by the UE or network. According to the excitation principle, potential data transmission relay nodes can choose to assume or not to assume a data relay service. For example, a direct connection communication shared service defines the relay node, certain form of reward can be obtained when relaying every IMbis of data or 1 minute of data or 1 time of data transmission, e.g., free relay service of IMbis or 1 minute or 1 time from other users. N virtual accumulated points can be obtained when the relay node relays every IMbis of data or 1 minute of data or 1 time of data transmission.
2. Gain limitation principle is as follows. A potential data transmission relay node can define a gain limitation threshold for itself. When an excitation issued by a data transmission service of the direct connection communication meets the threshold, the node promises to provide the relay service therefor.
3. Principle based on agreement is as follows. The UE can promise to give other members a corresponding number of data relay services in a manner of adding a mutual-help group while promising to obtain data relay services given by members within the group, e.g., promising to give other members relay services of IMbis or N Mbit if obtaining relay services of IMbis from the members; promising to give other members relay services of 1 minute or N minutes if obtaining relay services of 1 minute from other members; and promising to give other members relay service of 1 time or N times if obtaining relay service of 1 time from other members.

In the above technical solution, the node selection unit may include: a first selection unit for selecting a plurality of physical domain target nodes having distances with the data source node and the data reception target node within a preset range and/or having signal quality within a preset signal quality range according to the distance principle and/or the signal quality principle; and a second selection unit for selecting at least one business mode domain target node with a credit level higher than a preset credit level and/or with an excitation lower than a preset excitation from the plurality of physical domain target nodes according to the credit principle and/or the excitation principle; and regarding the at least one business mode domain target node as the bearer network node.

In the technical solution, to effectively solve the credit problem and the excitation problem of the direct connection communication network so as to form a good business mode for the direct connection communication network and establish a bearer network having a high safety and credit level, a plurality of physical domain target nodes can be firstly selected according to the distance principle and/or signal quality principle, then at least one business mode domain target node is selected from the plurality of physical domain target nodes according to the credit principle and/or excitation principle; and the business mode domain target node acts as a bearer network node. Of course, this is only one of methods for establishing an optimized direct connection communication network so as to solve the credit problem and the excitation problem in the direct connection communication network by establishing an optimized direct connection communication network. When selecting a plurality of physical domain target nodes, nodes having appropriate distances with the data source node and the data reception target node and having high signal quality and good intensity may be selected; and when selecting the bearer network node, the target node having high credit level and high excitation may be selected.

In the above technical solution, the node selection unit may include: a first selection unit for selecting a plurality of business mode domain target nodes with a credit level higher than a preset credit level and/or with an excitation lower than a preset excitation according to the credit principle and/or the excitation principle; and a second selection unit for selecting at least one physical domain target node having distances with the data source node and the data reception target node within a preset range and/or having signal quality within a preset signal quality range from the plurality of business mode domain target nodes according to the distance principle and/or the signal quality principle; and regarding the at least one physical domain target node as the bearer network node.

In the technical solution, the optimized direct connection communication network can be established and the credit problem and the excitation problem in the direct connection communication network can be solved by firstly selecting a plurality of business mode domain target nodes according to the credit principle and/or the excitation principle and then selecting the bearer network node from the plurality of business mode domain target nodes according to the distance principle and/or the signal quality principle. This solution is another solution for solving the credit problem and the excitation problem in the direct connection communication network. Of course, when selecting a plurality of physical domain target nodes, nodes having appropriate distances with the data source node and the data reception target node and having high signal quality and good intensity may still be selected; and when selecting the bearer network node, the target node having high credit level and high excitation may still be selected.

Of course, those skilled in the art should understand that selecting a bearer network node corresponding to the data source node and the data reception target node according to the physical domain network selection principle and the business mode domain network selection principle includes, but not limited to above two manners, and can also be in a manner of selecting an appropriate bearer network node simultaneously according to the physical domain network selection principle and the business mode domain network selection principle.

In the above technical solution, the node determining unit may include: a search unit for determining the data source node which transmits the service request when the service request is the data transmission request and searching a target node having a same service request with the data source node and/or a target node in a plurality of service domains in a same interest group with the data source node; and regarding the service domain target node as the data reception target node.

In the technical solution, when determining the source node and the target node, not only the target node interested in the service can be searched according to the service request of the source node so as to conduct data transmission and sharing, but also the target node interested in the service can be searched in other nodes in a same interest group with the data source node. The interest group can be formed according to the upper-layer application or subscription data, such as groups in WeChat, QQ, etc.

In the above technical solution, the data source node which transmits the service request may include a terminal and a base station.

In the technical solution, the node which transmits the service request can be a terminal or a base station. When the terminal transmits the service request to the base station, the base station judges whether to execute data transmission according to the data request of the terminal and seeks other terminals interested in the data transmission for the terminal. When the base station transmits the data transmission request to the terminal, the terminal judges whether to be interested in the service request according to the data transmission request, and the base station selects a terminal to conduct data transmission according to feedback of the terminals.

In the above technical solution, the judgment unit may be used for: acquiring a load of a current access network and/or a core network; adopting the data transmission mode of the direct connection communication when the load is greater than or equal to a preset load, and not adopting the data transmission mode of the direct connection communication when the load is less than the preset load.

In the technical solution, after receiving the request, the network side decides according to the load of the current access network and/or the core network whether to establish a shared network based on the direct connection communication, e.g., establishing the shared network based on the direct connection communication if the load of the core network and the access network is greater than a certain threshold, and adopting a unicast mode based on the base station for data transmission if the load of the core network and the access network is less than the threshold.

Through the above technical solution, an optimized direct connection communication network model can be established so as to solve the trust problem and the excitation problem in the direct connection communication network.

### Description of the Drawings

Figure 1 is a schematic diagram showing data transmission combining direct connection communication with P2P in a related art;
Figure 2 is a flow chart showing a data transmission method according to embodiments of the present disclosure;
Figure 3 is a schematic structural diagram showing a data transmission system according to embodiments of the present disclosure;
Figure 4 is a schematic diagram showing a network selection flow of a data transmission system according to embodiments of the present disclosure;
Figure 5 is a schematic diagram showing an establishing flow of a direct connection communication network according to embodiments of the present disclosure.

### Detailed Description

To understand above purposes, features and advantages of the present disclosure more clearly, the present disclosure is further detailed below in combination with drawings and specific embodiments. It should be explained that if there is no conflict, embodiments in the present application and the features in the embodiments can be mutually combined.

Many details are elaborated in following descriptions for convenience of fully understanding the present disclosure. However, the present disclosure can also be implemented in other modes different from those described here.

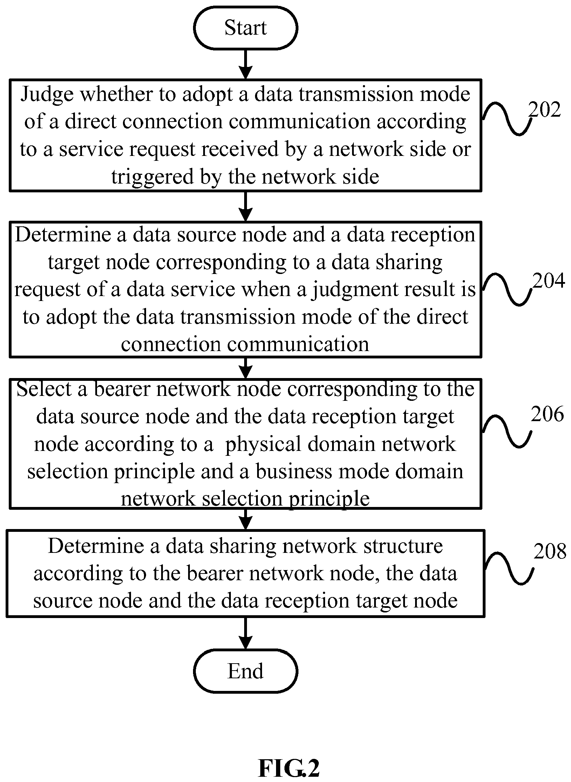

Figure 2 is a schematic diagram showing a data transmission flow of a direct connection communication network according to embodiments of the present disclosure.

As shown in Figure 2, the schematic diagram showing the data transmission flow of the direct connection communication network according to embodiments of the present disclosure includes following steps from step 202 to step 208. In step 202, when a service request is received, judges whether the service request is a data transmission request; in step 204, determines a data source node and a data reception target node corresponding to the data transmission request when a judgment result is that the service request is the data transmission request; in step 206, selects a bearer network node corresponding to the data source node and the data reception target node according to a physical domain network selection principle and a business mode domain network selection principle; and in step 208, determines a network structure corresponding to the data transmission mode of the direct connection communication according to the bearer network node, the data source node and the data reception target node.

In the technical solution, a network side would judge whether to conduct data transmission in a manner of establishing a direct connection communication network after receiving the service request or triggering the service request. The service request includes a data sharing request and an ordinary service request. As for the ordinary service request, the network side judges whether a node having a same service requirement exists or whether a shared network having a same service exists, and then judges whether to create or join an existing direct connection communication network in combination with a network (a core network and an access network) load condition. For a data transmission request, judges whether to use a direct connection communication mode to realize data transmission according to the network load condition. On a basis that a source UE (a data source node) and a reception UE (a data reception target node) are determined, a good data transmission network structure of the direct connection communication can be selected out according to the physical domain network selection principle, so as to finally ensure high efficiency and safety of information transmission and effectively solve the trust problem and the excitation problem in the direct connection communication network.

In the above technical solution, the physical domain network selection principle may include a distance principle and/or a signal quality principle, and the business mode domain principle may include a credit principle and/or an excitation principle.

In the technical solution, the physical domain network selection principle is a principle of selecting a transfer UE for a lower-layer physical domain network in the direct connection communication network, and the business mode domain principle is a principle of selecting a data transfer UE for a bearer network in the direct connection communication network. A transfer UE having appropriate distances with the source UE and the target UE can be selected by using the distance principle, so as to ensure effectiveness and rate of data transmission; a UE having good signal intensity can be selected by using the signal quality principle, so as to ensure correction rate of data transmission, so the transfer UE selected by using the physical domain network selection principle can establish a bottom-layer direct connection communication network which meets requirements of a certain error rate and a time delay; further, the bearer network effectively solves the trust problem and the excitation problem in the existing direct connection communication network by using the business mode domain principle (the credit principle and excitation principle).

A network construction principle based on credit makes restrictive modification to a physical domain network topology according to a credit relationship maintained by the network side or UE side, so that the actual bearer network meets the credit principle.

The credit principle is classified as follows.

A credit relationship maintained by the network side is as follows.

The credit relationship maintained by a network is maintained by the network side such as a base station or "a direct connection communication policy and management server", and has a main object to introduce access control based on operators. According to following principles, the network side can determine whether a certain node is allowed to be in a P2P data transmission network based on direct connection communication and whether the node can assume a data transmission or transfer role. Possible principles are as follows.
1. Access control based on network subscription data is as follows. During network access subscription, the user terminal determines whether the node can exist as a data transmission relay role in the direct connection communication network. Such information can be identified by 1 bit, and obtained from a user subscription database (e.g., HSS/HLR) in an authentication process. The node identified as Yes exists as a "credible node" in the absence of prior information of other judgment rules.
2. Access control based on histories is as follows. The network side continuously tracks and records user behaviors, such as number of times, duration and flow of a data transmission relay service completed by the user. Credit level of the user is comprehensively scored according to the above information. When certain conditions are met (e.g., a score threshold is met), the node is defined by the network side as a "credible node". Or, a trust priority is defined in accordance with a value of a comprehensive score. Relay selection is conducted according to the priority.

A credit relationship maintained by the UE side is as follows.

The credit relationship maintained by the UE side is maintained by the UE side, e.g., maintained by a UE upper-layer application or is reported by the UE to a dedicated server on a network side for performing background maintenance. A major purpose is to introduce a credit mechanism based on peculiar information of some users. For example:
1. UE relationship map maintained by the UE upper-layer application is as follows. The UE upper-layer application provides the relationship map, and then the relationship map is reported to the network side through signaling of a signaling side of an access network, and the network side conducts access limitation consideration when constructing a bearer network. The relationship map can define a credit priority for each "contact" according to the credit relationship. During consideration for relay, the relay is selected according to a priority order.
2. Relationship map provided by an application server on the network side is as follows. The UE upper-layer application establishes the relationship map, and map synchronization is realized by the application layer and the application server on the network side. When constructing the bearer network, the network side requests the relationship map to the application server and conducts access control according to the obtained information. The relationship map can define the credit priority for each "contact" according to the credit relationship. During consideration for relay, the relay is selected according to the priority order.

A network construction principle based on an excitation relationship is a reward and penalty mechanism established to support a certain business mode of the direct connection communication. Potential reward and penalty mechanisms can be as follows.
1. Excitation principle is as follows. The UE or network defines a certain excitation principle for data transmission services of the direct connection communication issued by the UE or network. According to the excitation principle, potential data transmission relay nodes can choose to assume or not to assume a data relay service. For example, a direct connection communication shared service defines the relay node, certain form of reward can be obtained when relaying every IMbis of data or 1 minute of data or 1 time of data transmission, e.g., free relay service of IMbis or 1 minute or 1 time from other users. N virtual accumulated points can be obtained when the relay node relays every IMbis of data or 1 minute of data or 1 time of data transmission.
2. Gain limitation principle is as follows. A potential data transmission relay node can define a gain limitation threshold for itself. When an excitation issued by a data transmission service of the direct connection communication meets the threshold, the node promises to provide the relay service therefor.
3. Principle based on agreement is as follows. The UE can promise to give other members a corresponding number of data relay services in a manner of adding a mutual-help group while promising to obtain data relay services given by members within the group, e.g., promising to give other members relay services of IMbis or N Mbit if obtaining relay services of IMbis from the members; promising to give other members relay services of 1 minute or N minutes if obtaining relay services of 1 minute from other members; and promising to give other members relay service of 1 time or N times if obtaining relay service of 1 time from other members.

In the above technical solution, the selecting a bearer network node corresponding to the data source node and the data reception target node according to the physical domain network selection principle and the business mode domain network selection principle may specifically include: selecting a plurality of physical domain target nodes having distances with the data source node and the data reception target node within a preset range and/or having signal quality or intensity within a preset signal quality or intensity range according to the distance principle and/or the signal quality principle; selecting at least one business mode domain target node with a credit level higher than or equal to a preset credit level and/or with an excitation higher than or equal to a preset excitation from the plurality of physical domain target nodes according to the credit principle and/or the excitation principle; and regarding the at least one business mode domain target node as the bearer network node.

In the technical solution, to effectively solve the credit problem and the excitation problem of the direct connection communication network so as to form a good business mode for the direct connection communication network and establish a bearer network having a high safety and credit level, a plurality of physical domain target nodes can be firstly selected according to the distance principle and/or signal quality principle, then at least one business mode domain target node is selected from the plurality of physical domain target nodes according to the credit principle and/or excitation principle; and the business mode domain target node acts as a bearer network node. Of course, this is only one of methods for establishing an optimized direct connection communication network so as to solve the credit problem and the excitation problem in the direct connection communication network. When selecting a plurality of physical domain target nodes, nodes having appropriate distances with the data source node and the data reception target node and having high signal quality and good intensity may be selected; and when selecting the bearer network node, the target node having high credit level and high excitation may be selected.

In the above technical solution, the selecting a bearer network node corresponding to the data source node and the data reception target node according to the physical domain network selection principle and the business mode domain network selection principle may specifically include: selecting a plurality of business mode domain target nodes with a credit level higher than or equal to a preset credit level and/or with an excitation higher than or equal to a preset excitation according to the credit principle and/or the excitation principle; selecting at least one physical domain target node having distances with the data source node and the data reception target node within a preset range and/or having signal quality within a preset signal quality range from the plurality of business mode domain target nodes according to the distance principle and/or the signal quality principle; and regarding the at least one physical domain target node as the bearer network node.

In the technical solution, the optimized direct connection communication network can be established and the credit problem and the excitation problem in the direct connection communication network can be solved by firstly selecting a plurality of business mode domain target nodes according to the credit principle and/or the excitation principle and then selecting the bearer network node from the plurality of business mode domain target nodes according to the distance principle and/or the signal quality principle. This solution is another solution for solving the credit problem and the excitation problem in the direct connection communication network. Of course, when selecting a plurality of physical domain target nodes, nodes having appropriate distances with the data source node and the data reception target node and having high signal quality and good intensity may still be selected; and when selecting the bearer network node, the target node having high credit level and high excitation may still be selected.

Of course, those skilled in the art should understand that the selecting a bearer network node corresponding to the data source node and the data reception target node according to the physical domain network selection principle and the business mode domain network selection principle includes but is not limited to above two manners, and an appropriate bearer network node can also be selected simultaneously according to the physical domain network selection principle and the business mode domain network selection principle.

In the above technical solution, the determining the data source node and the data reception target node corresponding to the data transmission request may specifically include: determining the data source node corresponding to the service request and searching a target node interested in a service corresponding to the service request and/or a target node in a plurality of service domains in a same interest group with the data source node; and regarding the service domain target node as the data reception target node.

In the technical solution, when determining the source node and the target node, not only the target node interested in the service can be searched according to the service request of the source node so as to conduct data transmission and sharing, but also the target node interested in the service can be searched in other nodes in a same interest group with the data source node. The interest group can be formed according to the upper-layer application or subscription data, such as groups in WeChat, QQ, etc.

In the above technical solution, the data source node which transmits the service request may include a terminal and a base station.

In the technical solution, the node which transmits the service request can be a terminal or a base station. When the terminal transmits the service request to the base station, the base station judges whether to execute data transmission according to the data request of the terminal and seeks other terminals interested in the data transmission for the terminal. When the base station transmits the data transmission request to the terminal, the terminal judges whether to be interested in the service request according to the data transmission request, and the base station selects a terminal to conduct data transmission according to feedback of the terminals.

In the above technical solution, the judging whether to adopt the data transmission mode of the direct connection communication may specifically include: acquiring a load of a current access network and/or a core network; adopting the data transmission mode of the direct connection communication when the load is greater than or equal to a preset load, and not adopting the data transmission mode of the direct connection communication when the load is less than the preset load.

In the technical solution, after receiving the request, the network side decides according to the load of the current access network and/or the core network whether to establish a shared network based on the direct connection communication, e.g., establishing the shared network based on the direct connection communication if the load of the core network and the access network is greater than a certain threshold, and adopting a unicast mode based on the base station for data transmission if the load of the core network and the access network is less than the threshold.

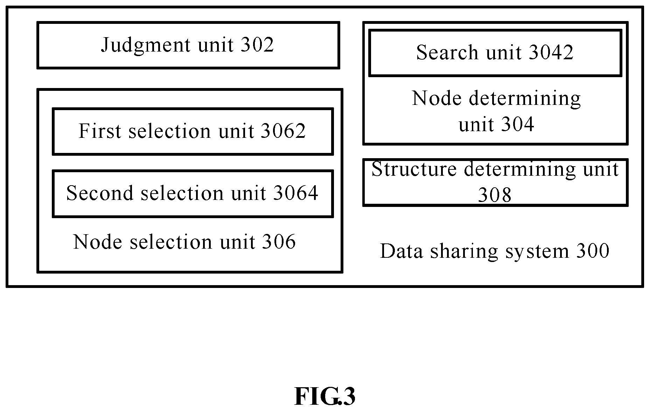

Figure 3 is a schematic structural diagram showing a data transmission system of a direct connection communication network according to embodiments of the present disclosure.

As shown in Figure 3, the schematic structural diagram showing the data transmission system 300 of the direct connection communication network according to embodiments of the present disclosure includes: a judgment unit 302 for judging whether a service request is a data transmission request in case of receiving the service request; a node determining unit 304 for determining a data source node and a data reception target node corresponding to the data transmission request when a judgment result is that the service request is the data transmission request; a node selection unit 306 for selecting a bearer network node corresponding to the data source node and the data reception target node according to the physical domain network selection principle and the business mode domain network selection principle; and a structure determining unit 308 for determining a network structure corresponding to the data transmission mode of the direct connection communication according to the bearer network node, the data source node and the data reception target node.

In the technical solution, after receiving the service request or triggering the service request, the network side judges whether to conduct data transmission in a manner of establishing a direct connection communication network. The service request includes a data sharing request and an ordinary service request. As for the ordinary service request, the network side judges whether a node having a same service requirement exists or whether a shared network having a same service exists, and then judges whether to create or join an existing direct connection communication network in combination with a network (core network and access network) load condition. As for a data transmission request, the network side judges whether to use a direct connection communication mode to realize data transmission according to the network load condition. On a basis of determining a source UE (data source node) and a reception UE (data reception target node), a good data transmission network structure of the direct connection communication can be selected according to the physical domain network selection principle, so as to finally ensure high efficiency and safety of information transmission and effectively solve the trust problem and the excitation problem in the direct connection communication network.

In the above technical solution, the physical domain network selection principle may include a distance principle and/or a signal quality principle, and the business mode domain principle may include a credit principle and/or an excitation principle,
where a network construction principle based on credit refers to conducting restrictive modification to a physical domain network topology according to a credit relationship maintained by the network side or UE side, so that an actual bearer network meets the credit principle.

The credit principle is classified as follows.

A credit relationship maintained by the network side is as follows.

The credit relationship maintained by a network is maintained by the network side such as a base station or "a direct connection communication policy and management server", and has a main object to introduce access control based on operators. According to following principles, the network side can determine whether a certain node is allowed to be in a P2P data transmission network based on direct connection communication and whether the node can assume a data transmission or transfer role. Possible principles are as follows.
1. Access control based on network subscription data is as follows. During network access subscription, the user terminal determines whether the node can exist as a data transmission relay role in the direct connection communication network. Such information can be identified by 1 bit, and obtained from a user subscription database (e.g., HSS/HLR) in an authentication process. The node identified as Yes exists as a "credible node" in the absence of prior information of other judgment rules.
2. Access control based on histories is as follows. The network side continuously tracks and records user behaviors, such as number of times, duration and flow of a data transmission relay service completed by the user. Credit level of the user is comprehensively scored according to the above information. When certain conditions are met (e.g., a score threshold is met), the node is defined by the network side as a "credible node". Or, a trust priority is defined in accordance with a value of a comprehensive score. Relay selection is conducted according to the priority.

A credit relationship maintained by the UE side is as follows.

The credit relationship maintained by the UE side is maintained by the UE side, e.g., maintained by a UE upper-layer application or is reported by the UE to a dedicated server on a network side for performing background maintenance. A major purpose is to introduce a credit mechanism based on peculiar information of some users. For example:
1. UE relationship map maintained by the UE upper-layer application is as follows. The UE upper-layer application provides the relationship map, and then the relationship map is reported to the network side through signaling of a signaling side of an access network, and the network side conducts access limitation consideration when constructing a bearer network. The relationship map can define a credit priority for each "contact" according to the credit relationship. During consideration for relay, the relay is selected according to a priority order.
2. Relationship map provided by an application server on the network side is as follows. The UE upper-layer application establishes the relationship map, and map synchronization is realized by the application layer and the application server on the network side. When constructing the bearer network, the network side requests the relationship map to the application server and conducts access control according to the obtained information. The relationship map can define the credit priority for each "contact" according to the credit relationship. During consideration for relay, the relay is selected according to the priority order.

A network construction principle based on an excitation relationship is a reward and penalty mechanism established to support a certain business mode of the direct connection communication. Potential reward and penalty mechanisms can be as follows.
1. Excitation principle is as follows. The UE or network defines a certain excitation principle for data transmission services of the direct connection communication issued by the UE or network. According to the excitation principle, potential data transmission relay nodes can choose to assume or not to assume a data relay service. For example, a direct connection communication shared service defines the relay node, certain form of reward can be obtained when relaying every IMbis of data or 1 minute of data or 1 time of data transmission, e.g., free relay service of IMbis or 1 minute or 1 time from other users. N virtual accumulated points can be obtained when the relay node relays every IMbis of data or 1 minute of data or 1 time of data transmission.
2. Gain limitation principle is as follows. A potential data transmission relay node can define a gain limitation threshold for itself. When an excitation issued by a data transmission service of the direct connection communication meets the threshold, the node promises to provide the relay service therefor.
3. Principle based on agreement is as follows. The UE can promise to give other members a corresponding number of data relay services in a manner of adding a mutual-help group while promising to obtain data relay services given by members within the group, e.g., promising to give other members relay services of IMbis or N Mbit if obtaining relay services of IMbis from the members; promising to give other members relay services of 1 minute or N minutes if obtaining relay services of 1 minute from other members; and promising to give other members relay service of 1 time or N times if obtaining relay service of 1 time from other members.

In the technical solution, the physical domain network selection principle is a principle of selecting a transfer UE for a lower-layer physical domain network in the direct connection communication network, and the business mode domain principle is a principle of selecting a data transfer UE for a bearer network in the direct connection communication network, where the transfer UE having appropriate distances with the source UE and the target UE can be selected by using the distance principle, so as to ensure data transmission effectiveness and rate; and the UE having good signal intensity can be selected by using the signal quality principle, so as to ensure data transmission correction rate, therefore the transfer UE selected by using the physical domain network selection principle can establish a bottom-layer direct connection communication network which meets a certain error rate and a time delay requirement; further, the bearer network effectively solves the trust problem and the excitation problem in the existing direct connection communication network by using the business mode domain principle (the credit principle and excitation principle).

In the above technical solution, the node selection unit 306 may include: a first selection unit 3062 for selecting a plurality of physical domain target nodes having distances with the data source node and the data reception target node within a preset range and/or having signal quality within a preset signal quality range according to the distance principle and/or the signal quality principle; and a second selection unit 3064 for selecting at least one business mode domain target node with a credit level higher than a preset credit level and/or with an excitation lower than a preset excitation from the plurality of physical domain target nodes according to the credit principle and/or the excitation principle; and regarding the at least one business mode domain target node as the bearer network node.

In the technical solution, to effectively solve the credit problem and the excitation problem of the direct connection communication network so as to form a good business mode for the direct connection communication network and establish a bearer network having a high safety and credit level, a plurality of physical domain target nodes can be firstly selected according to the distance principle and/or signal quality principle, then at least one business mode domain target node is selected from the plurality of physical domain target nodes according to the credit principle and/or excitation principle; and the business mode domain target node acts as a bearer network node. Of course, this is only one of methods for establishing an optimized direct connection communication network so as to solve the credit problem and the excitation problem in the direct connection communication network. When selecting a plurality of physical domain target nodes, nodes having appropriate distances with the data source node and the data reception target node and having high signal quality and good intensity may be selected; and when selecting the bearer network node, the target node having high credit level and high excitation may be selected.

In the above technical solution, the node selection unit 306 may include: a first selection unit 3062 for selecting a plurality of business mode domain target nodes with a credit level higher than a preset credit level and/or with an excitation lower than a preset excitation according to the credit principle and/or the excitation principle; and a second selection unit 3064 for selecting at least one physical domain target node having distances with the data source node and the data reception target node within a preset range and/or having signal quality within a preset signal quality range from the plurality of business mode domain target nodes according to the distance principle and/or the signal quality principle; and regarding the at least one physical domain target node as the bearer network node.

In the technical solution, the optimized direct connection communication network can be established and the credit problem and the excitation problem in the direct connection communication network can be solved by firstly selecting a plurality of business mode domain target nodes according to the credit principle and/or the excitation principle and then selecting the bearer network node from the plurality of business mode domain target nodes according to the distance principle and/or the signal quality principle. This solution is another solution for solving the credit problem and the excitation problem in the direct connection communication network. Of course, when selecting a plurality of physical domain target nodes, nodes having appropriate distances with the data source node and the data reception target node and having high signal quality and good intensity may still be selected; and when selecting the bearer network node, the target node having high credit level and high excitation may still be selected.

Of course, those skilled in the art should understand that the selecting a bearer network node corresponding to the data source node and the data reception target node according to the physical domain network selection principle and the business mode domain network selection principle includes but is not limited to above two manners, and an appropriate bearer network node can also be selected simultaneously according to the physical domain network selection principle and the business mode domain network selection principle.

In the above technical solution, the node determining unit 304 may include: a search unit 3042 for determining the data source node which transmits the service request when the service request is the data transmission request and searching a target node having a same service request with the data source node and/or a target node in a plurality of service domains in a same interest group with the data source node; and regarding the service domain target node as the data reception target node.

In the technical solution, when determining the source node and the target node, not only the target node interested in the service can be searched according to the service request of the source node so as to conduct data transmission and sharing, but also the target node interested in the service can be searched in other nodes in a same interest group with the data source node. The interest group can be formed according to the upper-layer application or subscription data, such as groups in WeChat, QQ, etc.

In the above technical solution, the data source node which transmits the service request may include a terminal and a base station.

In the technical solution, the node which transmits the service request can be a terminal or a base station. When the terminal transmits the service request to the base station, the base station judges whether to execute data transmission according to the data request of the terminal and seeks other terminals interested in the data transmission for the terminal. When the base station transmits the data transmission request to the terminal, the terminal judges whether to be interested in the service request according to the data transmission request, and the base station selects a terminal to conduct data transmission according to feedback of the terminals.

In the above technical solution, the judgment unit may be specifically used for: acquiring a load of a current access network and/or a core network; adopting the data transmission mode of the direct connection communication when the load is greater than or equal to a preset load, and not adopting the data transmission mode of the direct connection communication when the load is less than the preset load.

In the technical solution, there are many kinds of service requests, including not only a sharing request, but also ordinary requests such as a feedback request, a transmission request and the like. When the service request is the sharing request, the base station seeks a target terminal which can conduct data transmission for the terminal according to the sharing request. When the service request is the ordinary service request, after receiving the request, the base station seeks whether there is a request or shared network having a same service with the service request, and then establishes a bearer network according to a seeking result.

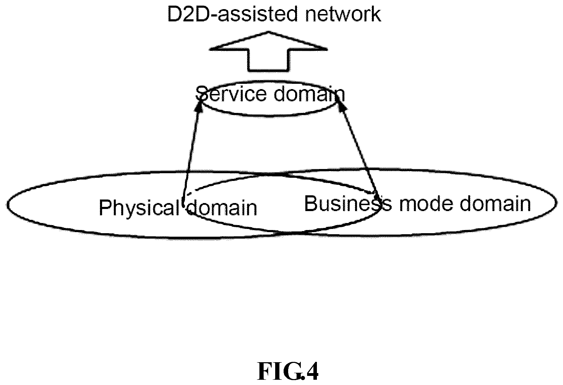

Figure 4 shows a direct connection communication network model according to embodiments of the present disclosure.

As shown in Figure 4, the direct connection communication network model according to embodiments of the present disclosure includes: a physical domain network, a business mode domain network and a service domain network. The above three domain networks respectively describe an establishing mode of the direct connection communication network from three levels of physical realization, business mode and upper-layer application structure,
where the physical domain network establishes a bottom-layer direct connection communication network that meets a certain error rate and a time delay requirement according to physical features among direct connection communication nodes; the business mode domain network controls and selects access nodes of the physical domain network according to defined business mode domain limitation features (e.g., credit and reciprocity principles) so as to form a bearer network that meets a certain business mode; the service domain network establishes a logic connection network between the data source node and the reception target node according to an existing service relationship.

Connotations and network construction principles of the physical domain network, the business mode domain network and the service domain network are described below.

### 1. Network models

1) "physical domain" model:
   working hypothesis: all UEs (users) are willing to freely provide sharing and transfer of direct connection communication data for other UEs (users);
   priority: necessary restrictive conditions for forming the direct connection communication physical network;
   purpose and problem to be solved: establishing a bottom-layer direct connection communication network that meets a certain error rate and a time delay requirement;
   network construction principles:
      a) distance principle: determining whether the direct connection communication network can be formed according to distances among the UEs;
      b) quality principle: determining whether the direct connection communication network can be formed according to the quality/intensity of detection signals;
2) "business mode domain" model:
   working hypothesis: not all of UEs are willing to freely provide sharing and transfer services of the direct connection communication network; however, certain emotional, spiritual or material cost is needed to be paid;
   priority: necessary conditions for forming a certain business mode of direct connection communication network;
   purpose and problem to be solved: solving the credit problem and the excitation problem in the direct connection communication network so as to enable the direct connection communication network to form a good business mode;
   network construction principles:
      a) credit principle: a "credit relationship" is used for conducting credit screening on the direct connection communication networks, so that the screened direct connection communication networks meet the certain credit relationship for enhancing the credit level of the direct connection communication networks; for example, only the direct connection communication networks higher than a certain credit level can establish a data shared network of the direct connection communication therewith; and users higher than a certain credit level can provide a specific type of transfer and sharing of data services;
      b) excitation principle: a "reciprocity relationship" and an "excitation relationship" are used for conducting excitation screening on the direct connection communication networks, so that the screened direct connection communication networks can support a certain business operation mode. For example, data transmission gain UE provides a certain quantity of material or spiritual encouragement to assistant UEs forming the direct connection communication networks so as to form a certain business mode of data transmission of direct connection communication. At this moment, the assistant UEs can judge whether to participate in reward of the direct connection communication networks according to the given quantity of material or spiritual encouragement.
3)"Service domain" model
   working hypothesis: all the UEs having a same service requirement (within a certain region) can form the direct connection communication networks with each other;
   priority: necessary conditions for forming specific service data transmission;
   purpose and problem to be solved: forming a high-layer direct connection communication network based on the service for solving a practical service data transmission problem;
   network construction principles:
   a) network construction according to the service requirement: forming an upper-layer direct connection communication network in accordance with a specific service requirement (data transmission need), and having a network construction purpose of providing specific service data transmission;
   b) network construction according to the interest group: network construction in a mode of the interest group in accordance with potential service requirements, and having a network construction purpose of providing a certain type of potential service data transmission.

2. Network construction principles:
following network construction principles are defined according to the above network models:
1) the "service domain" is responsible for the upper-layer application or specific services.
   A UE node in the "service domain" is a set of the target node and the data source node for realizing practical data transmission of a service. That is, a final destination and data source of the data are given by the "service domain".
   The UE node in the "service domain" has no need to meet the physical layer requirement for establishing the direct connection communication, and has no need to meet the business mode requirement defined by the "business mode domain";
2) the "physical domain" provides a basis of a physical layer for forming the network for the "service domain".
   The node in the "physical domain" must meet QoS requirements, e.g., the time delay requirement among the nodes, a packet loss ratio/error rate requirement among the nodes. The domain is responsible for efficient data transmission among the nodes;
   the node in the "physical domain" is not necessarily a start/target node in practical service data transmission, and may be a relay node of data transmission; and
   the node in the "physical domain" is not required to meet a certain business support mode, e.g., the credit principle or excitation principle.
3) the "business mode domain" provides necessary credit and business mode guarantee for the "physical domain":
   the node in the "business mode domain" must meet a specific business support mode, e.g., the credit principle or excitation principle;
   the node in the "business mode domain" is not necessarily a start/target node in practical service data transmission, and may be a bearer node which meets physical domain network construction conditions and business mode domain conditions;
4) the "service domain" network forms a bearer network through the "business mode domain" and the "physical domain".

The "service domain" forms a bearer network through the "physical domain", and limits the business mode of the bearer network with reference to the "business mode domain".

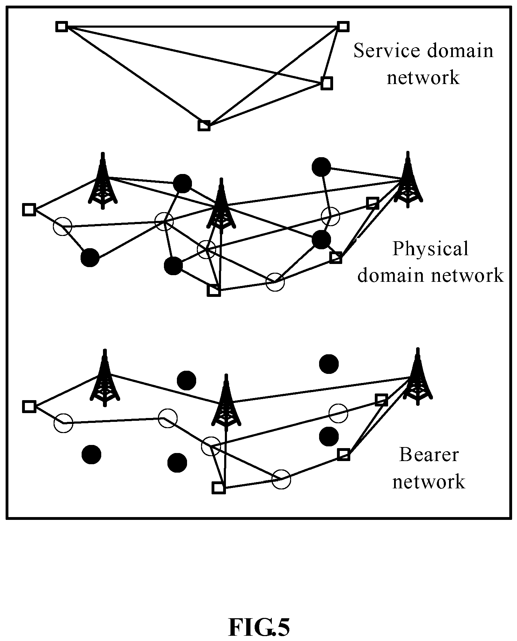

Figure 5 is a schematic diagram showing an establishing flow of a direct connection communication network according to embodiments of the present disclosure.

As shown in Figure 5, the schematic diagram showing the establishing flow of the direct connection communication network according to embodiments of the present disclosure includes following steps.
1) A service domain network is determined. According to a certain trigger mechanism, the network side determines a service domain network structure (i.e., determines a data source node and a data reception target node), and constructs "service domain network topology structural information", where the "service domain network topology structural information" includes: a region to which the node belongs, e.g., eNB id, GPS information, etc. of the node which can indicate the information of the region where the node is located; a node attribute for determining that the node belongs to the "data reception node " or/and the "data source node"; a node type for indicating that the node is UE, the base station or others, e.g., UE, macro base station, relay station, etc.; and a node identifier for identifying UE identity, e.g., IMSI id, eNB ID, etc.
2) The network side initiates a "direct connection communication network establishing command" including "service domain network structural information".
3) The physical domain network is established. The physical domain network is established according to the "service domain network topology structural information" and the physical domain network construction principle (may be based on the distance principle or Discovery principle).
4) Access control is performed on the business mode domain, Access control is performed on the physical network according to a "physical domain network solution" and "network construction principles of networks of the business mode domain". For example, access limit is directly performed on the physical network according to "black and white lists" or/and a "benefit limitation system", so as to finally obtain a bearer network solution of the direct connection communication.
5) A connection establishing flow of direct connection communication of the physical layer is entered.

Establishing steps of the direct connection communication network in Figure 5 are further illustrated below.

In Figure 5, the service domain determines the source node and the target node of data transmission according to a certain trigger mechanism and establishes a service domain network (four nodes in the service domain network in Figure 5 are target UE and source UE of data transmission), and meanwhile, constructs the "service domain network topology structural information".

According to the "service domain network topology structural information" and the physical domain network construction principle, the physical domain network is established (except for the source node and the target node in the service domain in the physical domain network in Figure 5, other nodes (nodes represented by white round balls and black round balls) are nodes which meet the physical domain relationship).

Access control is performed on the physical network according to "network construction principles of the business mode domain network " so as to screen out UEs which do not conform to the "network construction principles of the business mode domain network ", and the bearer network is established by using the UEs which conform to the "network construction principles of the business mode domain network " as well as the source UE and the target UE (unconnected nodes (nodes represented by black round balls) in the bearer network in Figure 5 are nodes which meet the physical domain relationship of the physical domain network but do not meet business domain rules).

The technical solution of the present disclosure is detailed above in combination with drawings. Through the technical solution of the present disclosure, a data transmission network structure of the direct connection communication with high safety factor and good data transmission performance can be determined, so as to finally ensure high efficiency and safety of information transmission and effectively solve the trust problem and the excitation problem in the direct connection communication network.

The above only describes selected embodiments of the present disclosure and is not intended to limit the present disclosure. For those skilled in the art, various variations and changes can be made to the present disclosure. Any modification, equivalent replacement, improvement, etc. made within a principle of the present disclosure shall be contained within the protection scope of the present disclosure.

## Claims

1. A data transmission method, comprising:
judging (202) whether to adopt a data transmission mode of a direct connection communication according to a service request received by a network side or triggered by the network side;
determining (204) a data source node and a data reception target node corresponding to the service request when a judgment result is to adopt the data transmission mode of the direct connection communication; **characterized by**
selecting (206) a bearer network node corresponding to the data source node and the data reception target node according to a physical domain network selection principle and a business mode domain network selection principle; and
determining (208) a network structure corresponding to the data transmission mode of the direct connection communication according to the bearer network node, the data source node and the data reception target node,
wherein the bearer network node is a node of a bearer network for bearing direction connection communication,
wherein the physical domain network selection principle is a principle of selecting a transfer UE for a lower-layer physical domain network in the direct connection communication network, and the business mode domain principle is a principle of selecting a data transfer UE for the bearer network in the direct connection communication network,
wherein the determining (204) the data source node and the data reception target node corresponding to the data transmission request specifically comprises:
determining the data source node corresponding to the service request and searching a target node interested in a service corresponding to the service request and/or a target node in a plurality of service domains in a same interest group with the data source node; and regarding the service domain target node as the data reception target node.

2. The data transmission method according to claim 1, wherein, the physical domain network selection principle comprises a distance principle and/or a signal quality principle, and the business mode domain principle comprises a credit principle and/or an excitation principle.

3. The data transmission method according to claim 2, wherein, the selecting (206) the bearer network node corresponding to the data source node and the data reception target node according to the physical domain network selection principle and the business mode domain network selection principle specifically comprises:
selecting a plurality of physical domain target nodes having distances with the data source node and the data reception target node within a preset range and/or having signal quality or intensity within a preset signal quality or intensity range according to the distance principle and/or the signal quality principle;
selecting at least one business mode domain target node with a credit level higher than or equal to a preset credit level and/or with an excitation higher than or equal to a preset excitation from the plurality of physical domain target nodes according to the credit principle and/or the excitation principle; and regarding the at least one business mode domain target node as the bearer network node.

4. The data transmission method according to claim 2, wherein, the selecting (206) the bearer network node corresponding to the data source node and the data reception target node according to the physical domain network selection principle and the business mode domain network selection principle specifically comprises:
selecting a plurality of business mode domain target nodes with a credit level higher than or equal to a preset credit level and/or with an excitation higher than or equal to a preset excitation according to the credit principle and/or the excitation principle;
selecting at least one physical domain target node having distances with the data source node and the data reception target node within a preset range and/or having signal quality within a preset signal quality range from the plurality of business mode domain target nodes according to the distance principle and/or the signal quality principle; and regarding the at least one physical domain target node as the bearer network node.

5. The data transmission method according to claim 1, further comprising:
searching the target node interested in the service in other nodes in a same interest group with the data source node.

6. The data transmission method according to claim 1, wherein, the data source node which transmits the service request comprises a terminal and a base station.

7. The data transmission method according to any of claims 1 to 6, wherein, the judging (202) whether to adopt the data transmission mode of the direct connection communication specifically comprises:
acquiring a load of a current access network and/or a core network;
adopting the data transmission mode of the direct connection communication when the load is greater than or equal to a preset load, and not adopting the data transmission mode of the direct connection communication when the load is less than the preset load.

8. A data transmission system, comprising:
a judgment unit (302) for judging whether to adopt a data transmission mode of a direct connection communication according to a service request received by a network side or triggered by the network side;
a node determining unit (304) for determining a data source node and a data reception target node corresponding to the service request when a judgment result is to adopt the data transmission mode of the direct connection communication; **characterized by**
a node selection unit (306) for selecting a bearer network node corresponding to the data source node and the data reception target node according to a physical domain network selection principle and a business mode domain network selection principle; and
a structure determining unit (308) for determining a network structure corresponding to the data transmission mode of the direct connection communication according to the bearer network node, the data source node and the data reception target node,
wherein the bearer network node is a node of a bearer network for bearing direction connection communication,
wherein the physical domain network selection principle is a principle of selecting a transfer UE for a lower-layer physical domain network in the direct connection communication network, and the business mode domain principle is a principle of selecting a data transfer UE for the bearer network in the direct connection communication network,
wherein the node determining unit (304) comprises:
a search unit (3042) for determining the data source node corresponding to the service request and searching a target node interested in a service corresponding to the service request and/or a target node in a plurality of service domains in a same interest group with the data source node; and regarding the service domain target node as the data reception target node.

9. The data transmission system according to claim 8, wherein, the physical domain network selection principle comprises a distance principle and/or a signal quality principle, and the business mode domain principle comprises a credit principle and/or an excitation principle.

10. The data transmission system according to claim 9, wherein, the node selection unit (306) comprises:
a first selection unit (3062) for selecting a plurality of physical domain target nodes having distances with the data source node and the data reception target node within a preset range and/or having signal quality within a preset signal quality range according to the distance principle and/or the signal quality principle; and
a second selection unit (3064) for selecting at least one business mode domain target node with a credit level higher than a preset credit level and/or with an excitation lower than a preset excitation from the plurality of physical domain target nodes according to the credit principle and/or the excitation principle; and regarding the at least one business mode domain target node as the bearer network node.

11. The data transmission system according to claim 9, wherein, the node selection unit (306) comprises:
a first selection unit (3062) for selecting a plurality of business mode domain target nodes with a credit level higher than a preset credit level and/or with an excitation lower than a preset excitation according to the credit principle and/or the excitation principle; and
a second selection unit (3064) for selecting at least one physical domain target node having distances with the data source node and the data reception target node within a preset range and/or having signal quality within a preset signal quality range from the plurality of business mode domain target nodes according to the distance principle and/or the signal quality principle; and regarding the at least one physical domain target node as the bearer network node.

12. The data transmission system according to claim 8, wherein, the data source node which transmits the service request comprises a terminal and a base station.

13. The data transmission system according to any of claims 8 to 12, wherein, the judgment unit (302) is specifically used for:
acquiring a load of a current access network and/or a core network;
adopting the data transmission mode of the direct connection communication when the load is greater than or equal to a preset load, and not adopting the data transmission mode of the direct connection communication when the load is less than the preset load.

## Patentansprüche

1. Datenübertragungsverfahren, welches umfasst:
ein Beurteilen (202), ob ein Datenübertragungsmodus einer Kommunikation einer direkten Verbindung gemäß einer Dienstanforderung angenommen werden soll, die von einer Netzwerkseite empfangen worden ist oder die von der Netzwerkseite ausgelöst worden ist;
ein Bestimmen (204) eines Datenquellenknotens und eines Datenempfangszielknotens, die der Dienstanforderung entsprechen, wenn ein Beurteilungsergebnis darin besteht, den Datenübertragungsmodus der Kommunikation der direkten Verbindung anzunehmen; **gekennzeichnet durch**
ein Auswählen (206) eines Trägernetzwerkknotens, der dem Datenquellenknoten und dem Datenempfangszielknoten entspricht, gemäß einem Auswahlprinzip für ein Netzwerk physikalischer Domänen und einem Auswahlprinzip für ein Netzwerk von Geschäftsmodusdomänen; und
ein Bestimmen (208) einer Netzwerkstruktur, die dem Datenübertragungsmodus der Kommunikation der direkten Verbindung entspricht, gemäß dem Trägernetzwerkknoten, dem Datenquellenknoten und dem Datenempfangszielknoten;
wobei der Trägernetzwerkknoten ein Knoten eines Trägernetzwerks für die Kommunikation einer Trägerrichtungsverbindung ist,
wobei das Auswahlprinzip für ein Netzwerk physikalischer Domänen ein Prinzip zur Auswahl eines Benutzergeräts einer Übertragung für das Netzwerk physikalischer Domänen einer niedrigeren Schicht in dem Netzwerk der direkten Verbindungskommunikation ist und das Geschäftsmodusdomänenprinzip ein Prinzip zur Auswahl eines Benutzergeräts einer Datenübertragung für das Trägernetzwerk in dem Netzwerk der direkten Verbindungskommunikation ist,
wobei das Bestimmen (204) des Datenquellenknotens und des Datenempfangszielknotens, die der Datenübertragungsanforderung entsprechen, insbesondere umfasst:
ein Bestimmen des Datenquellenknotens, der der Dienstanforderung entspricht, und ein Durchsuchen eines Zielknotens, der an einem Dienst interessiert ist, der der Dienstanforderung entspricht, und / oder eines Zielknotens in einer Vielzahl von Dienstdomänen in derselben Interessengruppe mit dem Datenquellenknoten; und ein Betrachten des Dienstdomänenzielknotens als den Datenempfangszielknoten.

2. Datenübertragungsverfahren nach Anspruch 1, wobei das Auswahlprinzip für das Netzwerk physikalischer Domänen ein Entfernungsprinzip und / oder ein Signalqualitätsprinzip umfasst und wobei das Geschäftsmodusdomänenprinzip ein Kreditprinzip und / oder ein Anregungsprinzip umfasst.

3. Datenübertragungsverfahren nach Anspruch 2, wobei das Auswählen (206) des Trägernetzwerkknotens, der dem Datenquellenknoten und dem Datenempfangszielknoten entspricht, gemäß dem Auswahlprinzip für das Netzwerk physikalischer Domänen und dem Auswahlprinzip für das Netzwerk von Geschäftsmodusdomänen erfolgt, insbesondere umfasst:
ein Auswählen gemäß dem Entfernungsprinzip und / oder dem Signalqualitätsprinzip von einer Vielzahl von Zielknoten der physikalischen Domäne, die Abstände zu dem Datenquellenknoten und dem Datenempfangszielknoten innerhalb eines voreingestellten Bereichs aufweisen und / oder die eine Signalqualität oder -intensität innerhalb eines voreingestellten Signalqualitäts- oder Intensitätsbereichs aufweisen;
ein Auswählen gemäß dem Kreditprinzip und / oder dem Anregungsprinzip von mindestens einem Geschäftsmodusdomänenzielknoten, der ein Kreditniveau aufweist, das höher oder gleich einem voreingestellten Kreditniveau ist, und / oder der eine Anregung aufweist, die höher oder gleich einer voreingestellten Anregung ist, aus der Vielzahl von Zieldomänen der physikalischen Domänen; und ein Betrachten des mindestens einen Geschäftsmodusdomänenzielknoten als den Trägernetzwercknoten.

4. Datenübertragungsverfahren nach Anspruch 2, wobei das Auswählen (206) gemäß dem Auswahlprinzip für das Netzwerk physikalischer Domänen und dem Auswahlprinzip für das Netzwerk von Geschäftsmodusdomänen von dem Trägernetzwercknoten, der dem Datenquellenknoten und dem Datenempfangszielknoten entspricht, insbesondere umfasst:
ein Auswählen gemäß dem Kreditprinzip und / oder dem Anregungsprinzip von einer Vielzahl von Geschäftsmodusdomänenzielknoten, die ein Kreditniveau aufweisen, das höher oder gleich einem voreingestellten Kreditniveau ist, und / oder die eine Anregung aufweisen, die höher oder gleich einer voreingestellten Anregung ist;
ein Auswählen gemäß dem Entfernungsprinzip und / oder dem Signalqualitätsprinzip von mindestens einem Zielknoten einer physikalischen Domäne, der Abstände zu dem Datenquellenknoten und dem Datenempfangszielknoten innerhalb eines voreingestellten Bereichs aufweist, und / oder der eine Signalqualität innerhalb eines voreingestellten Signalqualitätsbereichs aufweist, aus der Vielzahl von Geschäftszieldomänenzielknoten; und ein Betrachten des mindestens einen Zielknoten der physikalischen Domäne als den Trägernetzwerkknoten.

5. Datenübertragungsverfahren nach Anspruch 1, welches ferner umfasst:
ein Durchsuchen des an dem Dienst interessierten Zielknotens in anderen Knoten in derselben Interessengruppe mit dem Datenquellenknoten.

6. Datenübertragungsverfahren nach Anspruch 1, wobei der Datenquellenknoten, der die Dienstanforderung überträgt, ein Endgerät und eine Basisstation aufweist.

7. Datenübertragungsverfahren nach einem der Ansprüche 1 bis 6, wobei die Beurteilung (202), ob der Datenübertragungsmodus der Kommunikation der direkten Verbindung übernommen werden soll, insbesondere umfasst:
ein Erfassen einer Last eines aktuellen Zugangsnetzwerks und / oder eines Kernnetzwerks;
ein Übernehmen des Datenübertragungsmodus der Kommunikation der direkten Verbindung, wenn die Last größer oder gleich einer voreingestellten Last ist, und ein Nicht-Übernehmen des Datenübertragungsmodus der Kommunikation der direkten Verbindung, wenn die Last kleiner als die voreingestellte Last ist.

8. Datenübertragungssystem, welches aufweist:
eine Beurteilungseinheit (302) zum Beurteilen, ob ein Datenübertragungsmodus einer Kommunikation einer direkten Verbindung gemäß einer von einer Netzwerkseite empfangenen oder von der Netzwerkseite ausgelösten Dienstanforderung angenommen werden soll;
eine Knotenbestimmungseinheit (304) zum Bestimmen eines Datenquellenknotens und eines Datenempfangszielknotens, die der Dienstanforderung entsprechen, wenn ein Beurteilungsergebnis darin besteht, den Datenübertragungsmodus der Kommunikation der direkten Verbindung anzunehmen; **gekennzeichnet durch**
eine Knotenauswahleinheit (306) zum Auswählen eines Trägernetzwercknotens, der dem Datenquellenknoten und dem Datenempfangszielknoten entspricht, gemäß einem Auswahlprinzip für ein Netzwerk physikalischer Domänen und einem Auswahlprinzip für ein Netzwerk von Geschäftsmodusdomänen; und
eine Strukturbestimmungseinheit (308) zum Bestimmen einer Netzwerkstruktur, die dem Datenübertragungsmodus der Kommunikation der direkten Verbindung gemäß dem Trägernetzwerkknoten, dem Datenquellenknoten und dem Datenempfangszielknoten entspricht;
wobei der Trägernetzwerkknoten ein Knoten eines Trägernetzwerks für die Kommunikation einer Trägerrichtungsverbindung ist,
wobei das Auswahlprinzip für ein Netzwerk physikalischer Domänen ein Prinzip zur Auswahl eines Benutzergeräts einer Übertragung für ein Netzwerk physikalischer Domänen einer niedrigeren Schicht in dem Netzwerk der direkten Verbindungskommunikation ist und wobei das Auswahlprinzip für das Netzwerk von Geschäftsmodusdomänen ein Prinzip zur Auswahl eines Benutzergeräts einer Datenübertragung für das Trägernetzwerk in dem Netzwerk der direkten Verbindungskommunikation ist,
wobei die Knotenbestimmungseinheit (304) aufweist:
eine Sucheinheit (3042) zum Bestimmen des Datenquellenknotens, der der Dienstanforderung entspricht, und zum Suchen eines Zielknotens, der an einem Dienst interessiert ist, der der Dienstanforderung entspricht, und / oder eines Zielknotens in einer Vielzahl von Dienstdomänen in derselben Interessengruppe mit dem Datenquellenknoten; und zum Betrachten des Dienstdomänenzielknotens als den Datenempfangszielknoten.

9. Datenübertragungssystem nach Anspruch 8, wobei Auswahlprinzip für das Netzwerk physikalischer Domänen ein Entfernungsprinzip und / oder ein Signalqualitätsprinzip umfasst und das Geschäftsmodusdomänenprinzip ein Kreditprinzip und / oder ein Anregungsprinzip umfasst.

10. Datenübertragungssystem nach Anspruch 9, wobei die Knotenauswahleinheit (306) aufweist:
eine erste Auswahleinheit (3062) zum Auswählen gemäß dem Entfernungsprinzip und / oder dem Signalqualitätsprinzip von einer Vielzahl von Zielknoten der physikalischen Domäne, die Abstände zu dem Datenquellenknoten und dem Datenempfangszielknoten innerhalb eines voreingestellten Bereichs aufweisen, und / oder die eine Signalqualität innerhalb eines voreingestellten Signalqualitätsbereichs aufweisen; und
eine zweite Auswahleinheit (3064) zum Auswählen gemäß dem Kreditprinzip und / oder dem Anregungsprinzip von mindestens einem Geschäftsmodusdomänenzielknotens, der ein Kreditniveau aufweist, das höher als ein voreingestelltes Kreditniveau ist, und / oder das eine Anregung aufweist, die niedriger als eine voreingestellte Anregung ist, aus der Vielzahl physikalischer Domänenzielknoten; und zum Betrachten des mindestens einen Geschäftsmodusdomänenzielknotens als den Trägernetzwerkknoten.

11. Datenübertragungssystem nach Anspruch 9, wobei die Knotenauswahleinheit (306) aufweist:
eine erste Auswahleinheit (3062) zum Auswählen gemäß dem Kreditprinzip und / oder dem Anregungsprinzip von einer Vielzahl von Geschäftsmodusdomänenzielknoten, die ein Kreditniveau aufweisen, das höher als ein voreingestelltes Kreditniveau ist, und / oder die eine Anregung aufweisen, die niedriger als eine voreingestellte Anregung ist; und
eine zweite Auswahleinheit (3064) zum Auswählen gemäß dem Entfernungsprinzip und / oder dem Signalqualitätsprinzip von mindestens einem Zielknoten der physikalischen Domäne, der Abstände zu dem Datenquellenknoten und dem Datenempfangszielknoten innerhalb eines voreingestellten Bereichs aufweist, und / oder der eine Signalqualität innerhalb eines voreingestellten Signalqualitätsbereichs aufweist, aus der Vielzahl von Geschäftsmodusdomänenzielknoten; und zum Betrachten des mindestens einen Zielknoten der physikalischen Domäne als den Trägernetzwerkknoten.

12. Datenübertragungssystem nach Anspruch 8, wobei der Datenquellenknoten, der die Dienstanforderung sendet, ein Endgerät und eine Basisstation aufweist.

13. Datenübertragungssystem nach einem der Ansprüche 8 bis 12, wobei die Beurteilungseinheit (302) insbesondere verwendet wird für:
ein Erfassen einer Last eines aktuellen Zugangsnetzwerks und / oder eines Kernnetzwerks;
ein Übernehmen des Datenübertragungsmodus der Kommunikation der direkten Verbindung, wenn die Last größer oder gleich einer voreingestellten Last ist, und ein Nicht-Übernehmen des Datenübertragungsmodus der Kommunikation der direkten Verbindung, wenn die Last kleiner als die voreingestellte Last ist.

## Revendications

1. Procédé de transmission de données, comprenant :
l'évaluation (202) pour savoir s'il convient d'adopter un mode de transmission de données d'une communication par connexion directe en fonction d'une demande de service reçue par un côté réseau ou déclenchée par le côté réseau ;
la détermination (204) d'un nœud source de données et d'un nœud cible de réception de données correspondant à la demande de service lorsqu'un résultat d'évaluation vise à adopter le mode de transmission de données de la communication par connexion directe ; **caractérisé par**
la sélection (206) d'un nœud de réseau porteur correspondant au nœud source de données et au nœud cible de réception de données en fonction d'un principe de sélection de réseau de domaine physique et d'un principe de sélection de réseau de domaine en mode entreprise ; et
la détermination (208) d'une structure de réseau correspondant au mode de transmission de données de la communication par connexion directe en fonction du nœud de réseau porteur, du nœud source de données et du nœud cible de réception de données,
dans lequel le nœud de réseau porteur est un nœud d'un réseau porteur pour prendre en charge une communication par connexion de direction,
dans lequel le principe de sélection de réseau de domaine physique est un principe de sélection d'un UE de transfert pour un réseau de domaine physique de couche inférieure dans le réseau de communication par connexion directe, et le principe de domaine en mode entreprise est un principe de sélection d'un UE de transfert de données pour le réseau porteur dans le réseau de communication par connexion directe,
dans lequel la détermination (204) du nœud source de données et du nœud cible de réception de données correspondant à la demande de transmission de données comprend en particulier :
la détermination du nœud source de données correspondant à la demande de service et la recherche d'un nœud cible intéressé par un service correspondant à la demande de service et/ou d'un nœud cible parmi une pluralité de domaines de service dans le même groupe d'intérêts que le nœud source de données ; et le fait de considérer le nœud cible de domaine de service comme étant le nœud cible de réception de données.

2. Procédé de transmission de données selon la revendication 1, dans lequel, le principe de sélection de réseau de domaine physique comprend un principe de distance et/ou un principe de qualité de signal, et le principe de domaine en mode entreprise comprend un principe de crédit et/ou un principe d'excitation.

3. Procédé de transmission de données selon la revendication 2, dans lequel, la sélection (206) du nœud de réseau porteur correspondant au nœud source de données et au nœud cible de réception de données en fonction du principe de sélection de réseau de domaine physique et du principe de sélection de réseau de domaine en mode entreprise comprend en particulier :
la sélection d'une pluralité de nœuds cibles de domaine physique à certaines distances du nœud source de données et du nœud cible de réception de données comprises dans une plage préétablie et/ou ayant une qualité ou une intensité de signal comprise dans une plage de qualité ou d'intensité de signal préétablie en fonction du principe de distance et/ou du principe de qualité de signal ;
la sélection d'au moins un nœud cible de domaine en mode entreprise avec un niveau de crédit supérieur ou égal à un niveau de crédit préétabli et/ou avec une excitation supérieure ou égale à une excitation préétablie à partir de la pluralité de nœuds cibles de domaine physique en fonction du principe de crédit et/ou du principe d'excitation ; et le fait de considérer l'au moins un nœud cible de domaine en mode entreprise comme étant le nœud de réseau porteur.

4. Procédé de transmission de données selon la revendication 2, dans lequel, la sélection (206) du nœud de réseau porteur correspondant au nœud source de données et au nœud cible de réception de données en fonction du principe de sélection de réseau de domaine physique et du principe de sélection de réseau de domaine en mode entreprise comprend en particulier :
la sélection d'une pluralité de nœuds cibles de domaine en mode entreprise avec un niveau de crédit supérieur ou égal à un niveau de crédit préétabli et/ou avec une excitation supérieure ou égale à une excitation préétablie en fonction du principe de crédit et/ou du principe d'excitation ;
la sélection d'au moins un nœud cible de domaine physique à certaines distances du nœud source de données et du nœud cible de réception de données comprises dans une plage préétablie et/ou ayant une qualité de signal comprise dans une plage de qualité de signal préétablie à partir de la pluralité de nœuds cibles de domaine en mode entreprise en fonction du principe de distance et/ou du principe de qualité de signal ; et le fait de considérer l'au moins un nœud cible de domaine physique comme étant le nœud de réseau porteur.

5. Procédé de transmission de données selon la revendication 1, comprenant en outre :
la recherche du nœud cible intéressé par le service dans d'autres nœuds dans un même groupe d'intérêts que le nœud source de données.

6. Procédé de transmission de données selon la revendication 1, dans lequel, le nœud source de données qui transmet la demande de service comprend un terminal et une station de base.

7. Procédé de transmission de données selon l'une quelconque des revendications 1 à 6, dans lequel, l'évaluation (202) pour savoir s'il convient d'adopter le mode de transmission de données de la communication par connexion directe comprend en particulier :
l'acquisition d'une charge d'un réseau d'accès courant et/ou d'un réseau central ;
l'adoption du mode de transmission de données de la communication par connexion directe lorsque la charge est supérieure ou égale à une charge préétablie, et la non-adoption du mode de transmission de données de la communication par connexion directe lorsque la charge est inférieure ou égale à la charge préétablie.

8. Système de transmission de données, comprenant :
une unité d'évaluation (302) pour évaluer s'il convient d'adopter un mode de transmission de données d'une communication par connexion directe en fonction d'une demande de service reçue par un côté réseau ou déclenchée par le côté réseau ;
une unité de détermination de nœud (304) pour déterminer un nœud source de données et un nœud cible de réception de données correspondant à la demande de service lorsqu'un résultat d'évaluation vise à adopter le mode de transmission de données de la communication par connexion directe ; **caractérisé par**
une unité de sélection de nœud (306) pour sélectionner un nœud de réseau porteur correspondant au nœud source de données et au nœud cible de réception de données en fonction d'un principe de sélection de réseau de domaine physique et d'un principe de sélection de réseau de domaine en mode entreprise ; et
une unité de détermination de structure (308) pour déterminer une structure de réseau correspondant au mode de transmission de données de la communication par connexion directe en fonction du nœud de réseau porteur, du nœud source de données et du nœud cible de réception de données,
dans lequel le nœud de réseau porteur est un nœud d'un réseau porteur pour prendre en charge une communication par connexion de direction,
dans lequel le principe de sélection de réseau de domaine physique est un principe de sélection d'un UE de transfert pour un réseau de domaine physique de couche inférieure dans le réseau de communication par connexion directe, et le principe de domaine en mode entreprise est un principe de sélection d'un UE de transfert de données pour le réseau porteur dans le réseau de communication par connexion directe,
dans lequel l'unité de détermination de nœud (304) comprend :
une unité de recherche (3042) pour déterminer le nœud source de données correspondant à la demande de service et chercher un nœud cible intéressé par un service correspondant à la demande de service et/ou un nœud cible parmi une pluralité de domaines de service dans un même groupe d'intérêts que le nœud source de données ; et considérer le nœud cible de domaine de service comme étant le nœud cible de réception de données.

9. Système de transmission de données selon la revendication 8, dans lequel, le principe de sélection de réseau de domaine physique comprend un principe de distance et/ou un principe de qualité de signal, et le principe de domaine en mode entreprise comprend un principe de crédit et/ou un principe d'excitation.

10. Système de transmission de données selon la revendication 9, dans lequel, l'unité de sélection de nœud (306) comprend :
une première unité de sélection (3062) pour sélectionner une pluralité de nœuds cibles de domaine physique à certaines distances du nœud source de données et du nœud cible de réception de données comprises dans une plage préétablie et/ou ayant une qualité de signal comprise dans une plage de qualité de signal préétablie en fonction du principe de distance et/ou du principe de qualité de signal ; et
une seconde unité de sélection (3064) pour sélectionner au moins un nœud cible de domaine en mode entreprise avec un niveau de crédit supérieur à un niveau de crédit préétabli et/ou avec une excitation inférieure à une excitation préétablie à partir de la pluralité de nœuds cibles de domaine physique en fonction du principe de crédit et/ou du principe d'excitation ; et considérer l'au moins un nœud cible de domaine en mode entreprise comme étant le nœud de réseau porteur.

11. Système de transmission de données selon la revendication 9, dans lequel, l'unité de sélection de nœud (306) comprend :
une première unité de sélection (3062) pour sélectionner une pluralité de nœuds cibles de domaine en mode entreprise avec un niveau de crédit supérieur à un niveau de crédit préétabli et/ou avec une excitation inférieure à une excitation préétablie en fonction du principe de crédit et/ou du principe d'excitation ; et
une seconde unité de sélection (3064) pour sélectionner au moins un nœud cible de domaine physique à certaines distances du nœud source de données et du nœud cible de réception de données comprises dans une plage préétablie et/ou ayant une qualité de signal comprise dans une plage de qualité de signal préétablie à partir de la pluralité de nœuds cibles de domaine en mode entreprise en fonction du principe de distance et/ou du principe de qualité de signal ; et considérer l'au moins un nœud cible de domaine physique comme étant le nœud de réseau porteur.

12. Système de transmission de données selon la revendication 8, dans lequel, le nœud source de données qui transmet la demande de service comprend un terminal et une station de base.

13. Système de transmission de données selon l'une quelconque des revendications 8 à 12, dans lequel, l'unité d'évaluation (302) est en particulier utilisée pour :
acquérir une charge d'un réseau d'accès courant et/ou d'un réseau central ;
adopter le mode de transmission de données de la communication par connexion directe lorsque la charge est supérieure ou égale à une charge préétablie, et ne pas adopter le mode de transmission de données de la communication par connexion directe lorsque la charge est inférieure à la charge préétablie.
